# EUROPÄISCHE PATENTSCHRIFT

(11) **EP 4 568 833 B1**
(45) Veröffentlichungstag und Bekanntmachung des Hinweises auf die Patenterteilung: **13.05.2026**
(21) Anmeldenummer: 23738470.6
(22) Anmeldetag: 03.07.2023
(51) Int. Cl.: B32B 5/18, B32B 5/24, B32B 27/06, B32B 27/28

(54) **SCHICHTANORDNUNG ZUR VERKLEIDUNG EINES INNENRAUMS, INNENRAUMDÄMPFUNG FÜR EIN KRAFTFAHRZEUG UND KRAFTFAHRZEUG**
LAYERED ARRANGEMENT FOR LINING AN INTERIOR SPACE, INTERIOR-SPACE DAMPING FOR A MOTOR VEHICLE, AND MOTOR VEHICLE
AGENCEMENT EN COUCHES POUR REVÊTIR UN ESPACE INTÉRIEUR, AMORTISSEMENT D'ESPACE INTÉRIEUR POUR VÉHICULE À MOTEUR, ET VÉHICULE À MOTEUR

(30) Priorität: 11.08.2022 DE 102022002924
(43) Veröffentlichungstag der Anmeldung: 18.06.2025
(73) Patentinhaber: Mercedes-Benz Group AG, 70372 Stuttgart (DE)
(72) Erfinder: MZYK, Oliver, 75394 Oberreichenbach (DE)
(74) Vertreter: Novagraaf Group
(86) Internationale Anmeldenummer: PCT/EP2023/068148
(87) Internationale Veröffentlichungsnummer: WO 2024/032972

(56) Entgegenhaltungen:
- EP-A1- 3 076 775
- WO-A1-2017/218142
- DE-A1- 102011 056 807

## Beschreibung

Die Erfindung betrifft eine Schichtanordnung zur Verkleidung eines Innenraums, insbesondere eines Kraftfahrzeugs, eine Innenraumdämpfung für ein Kraftfahrzeug mit einer solchen Schichtanordnung und ein Kraftfahrzeug mit einer solchen Innenraumdämpfung.

Ein Elektrofahrzeug weist neben einer Hochvoltbatterie mit einem Batteriemanagementsystem und einem Elektromotor eine Vielzahl an weiteren elektrischen und elektronischen Komponenten auf.

Da das Elektrofahrzeug lediglich einen begrenzten Bauraum aufweist, wird insbesondere die Hochvoltbatterie unterhalb des Fahrzeuginnenraums angeordnet. Somit ist diese bauraumbedingt in der Nähe der Fahrzeuginsassen angeordnet.

Gleichzeitig sind aufgrund der steigenden Leistungsanforderungen auch steigende Stromstärken, insbesondere beim Betrieb des Hochvoltsystems des Elektrofahrzeugs, notwendig.

Dies kann dazu führen, dass die Fahrzeuginsassen einem Magnetfeld ausgesetzt sind. Das Magnetfeld kann insbesondere zu Störungen von körpernahen und lebenserhaltenden Geräten, wie beispielsweise Insulinpumpen oder Herzschrittmachern, führen.

Somit ist es notwendig, die Fahrzeuginsassen gegenüber Magnetfeldern abzuschirmen, wobei gleichzeitig eine ausreichende akustische Dämpfung des Fahrzeuginnenraums sichergestellt werden sollte.

Eine Schutzvorrichtung zum Abschirmen von Personen gegen Magnetfelder ist beispielsweise aus DE 198 53 239 A1 bekannt. Die Schutzvorrichtung umfasst ein aus mehreren Wänden gebildetes Gehäuse, wobei die Wände weichmagnetische Partikel enthalten. Die weichmagnetischen Partikel können dabei insbesondere in nicht näher beschriebener Weise im Gehäuse selbst oder in einem Anstrich des Gehäuses eingebettet sein.

Die deutsche Patentanmeldung DE 10 2014 221 572 A1 offenbart ein Gehäuse für ein Steuergerät, wobei das Gehäuse ein Verbundmaterial mit ferromagnetischen Partikeln zum Abschirmen magnetischer Felder aufweist. Das Gehäuse kann mehrteilig ausgeführt sein und einen Deckel zum Verschließen einer Öffnung des Gehäuses aufweisen. Ein Verbundmaterial kann ein Kunststoff mit Beimengungen sein. Die Beimengungen können ferromagnetische Partikel sein. Ferromagnetische Partikel sind magnetisierbar und alternativ oder ergänzend magnetisch. Die ferromagnetischen Partikel können zumindest teilweise Ferritpartikel umfassen. Ferrit ist ein besonders gut magnetisierbares Material. Dadurch kann eine Wandstärke des Gehäuses gering gehalten werden.

Die deutsche Patentanmeldung DE 10 2004 034 225 A1 offenbart einen Abschirmmantel für eine elektrische oder elektronische Komponente; er umfasst ein magnetisch abschirmendes Material enthaltende Schicht sowie eine Vielzahl auf einer Seite dieser Schicht angeordneter Partikel aus einem magnetisierbaren Material. Vorzugsweise ist die das magnetisch abschirmende Material enthaltende Schicht von einer Folie aus Blei gebildet. Die magnetisierbaren Partikel können beispielsweise aus Magnetit bestehen. Zusätzlich kann der Abschirmmantel Bariumsulfat-Partikel auf derselben Seite der magnetisch abschirmenden Folie wie die magnetisierbaren Partikel enthalten.

Das deutsche Gebrauchsmuster DE 202014105495 U1 offenbart eine Auskleidungsstruktur, die an einer Karosserie eines Fahrzeugs angebracht ist, mit einer Schichtstruktur, die eine Anzahl von Schichten (16, 18, 20, 22) umfasst, und mit einem Übertragungselement (8), das zur kontaktlosen Übertragung elektrischer Energie an einen Verbraucher (6), insbesondere ein Heizelement im Fahrzeug (2) ausgebildet ist, wobei das Übertragungselement (8) aus einem elektrisch leitenden Material gefertigt ist und in die Schichtstruktur (14) integriert ist.

Die deutsche Patentanmeldung DE 10 2011 056 807 A1 offenbart eine Magnetfeldabschirmung für elektromagnetische Felder, vorzugsweise im Frequenzbereich von 50 Hz bis 200 kHz, im Wesentlichen bestehend aus einem aus mindestens drei übereinander angeordneten Schichten gebildeten Verbundblech, wobei mindestens eine der Schichten aus Elektroblech oder Elektroband besteht. Um eine derartige Magnetfeldabschirmung mit geringem Gewicht und guter Abschirmwirkung sowie kostengünstig zu schaffen, wird vorgeschlagen, dass mindestens eine der Schichten aus Stahlblech und mindestens eine der Schichten aus Kunststoff und/oder Elastomer besteht, wobei die mindestens eine Schicht aus Kunststoff und/oder Elastomer die mindestens eine Schicht aus Elektroblech/Elektroband und die mindestens eine Schicht aus Stahlblech miteinander stoffschlüssig verbindet.

Die europäische Patentanmeldung EP 3 076 775 A1 offenbart eine schallabsorbierende Folie, die bei der Absorption von Lärm aus magnetischen und/oder elektrischen Feldern hochwirksam ist, wobei die schallabsorbierende Wirkung in größeren Bandbreiten funktioniert. Diese ist folgendermaßen aufgebaut: eine lärmabsorbierende Folie, auf der mindestens zwei Schichten gestapelt sind, wobei die schallabsorbierende Folie eine magnetische Schicht mit einem magnetischen Material enthält und eine weitere Schicht aus einem schallabsorbierenden Gewebe, in der ein Metallfasern auf der Folie angeordnet sind und der gemeinsame logarithmische Wert des Oberflächenwiderstands von mindestens einer Seite des schallabsorbierenden Gewebes Werte zwischen 0 und 6 beträgt.

Die PCT- Patentanmeldung WO2017/218142 A1 offenbart eine Fußmatte mit reduziertem Büschelprofil auf der Rückseite der textilen Komponente der Fußmatte. Die Fußmatte besteht aus einer textilen Komponente und einer Basiskomponente. Die textile Komponente besteht aus Obergarn, das durch eine primäre Trägerschicht getuftet ist. Das reduzierte Büschelprofil befindet sich auf der Rückseite des textilen Bauteils. Zu den Vorteilen einer Bodenmatte mit reduziertem Büschelprofil gehören eine verbesserte Gleichmäßigkeit der auf das Textilbauteil aufgebrachten Sekundärträgerschicht und eine verbesserte Haltbarkeit des Textilbauteils.

Somit ist bekannt, Magnetfelder durch Werkstoffe mit einer ausreichend hohen Permeabilität abzuschirmen. Hierzu werden üblicherweise ferromagnetische Materialien, wie Eisen oder Stahl, verwendet. Aus Gewichtsgründen werden die Gehäuse von elektronischen und elektrischen Komponenten im Kraftfahrzeugbau aber überwiegend aus Aluminium gefertigt, da Aluminium eine geringere Dichte als Eisen oder Stahl aufweist. Aluminium schirmt jedoch aufgrund seiner paramagnetischen Eigenschaft nicht ausreichend vor Magnetfeldern ab.

Um trotzdem eine ausreichende magnetische Abschirmung bereitzustellen, können zusätzliche Schirmbleche aus einem ferromagnetischen Material eingesetzt werden. Diese benötigen jedoch zusätzlichen Bauraum und sind kostenintensiv. In besonders ungünstigen Fällen weist ein Aluminiumgehäuse mit zusätzlichen Schirmblechen eine größere Masse auf, als ein Gehäuse, welches bereits an sich eine ausreichende magnetische Abschirmung - und damit verbunden auch eine höhere Masse - aufweist. Aus Fertigungsgründen ist es jedoch nicht immer möglich, ein Gehäuse derart herzustellen.

Der Erfindung liegt daher die Aufgabe zugrunde, eine Schichtanordnung zur Verkleidung eines Innenraums, insbesondere eines Kraftfahrzeugs, eine Innenraumdämpfung für ein Kraftfahrzeug mit einer solchen Schichtanordnung und ein Kraftfahrzeug mit einer solchen Innenraumdämpfung zu schaffen, wobei die genannten Nachteile reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen.

Die Aufgabe wird insbesondere gelöst, indem eine Schichtanordnung zur Verkleidung eines Innenraums, insbesondere eines Kraftfahrzeugs, geschaffen wird, wobei die Schichtanordnung, insbesondere in dieser Schichtfolge, eine Funktionsschicht, eine Zwischenschicht und eine Deckschicht umfasst. Die Funktionsschicht weist einen Verbundwerkstoff aus einem Matrixmaterial und darin eingebetteten weichmagnetischen Partikeln auf, wobei die Zwischenschicht einen Schaumwerkstoff aufweist. Die Deckschicht weist ein textiles Flächengebilde auf, wobei die Deckschicht eine Sichtfläche aufweist oder als eine Sichtfläche eingerichtet ist. Auf diese Weise wird vorteilhaft eine Schichtanordnung bereitgestellt, die ein relativ geringes Gewicht und gleichzeitig eine ausreichende akustische Schalldämpfung aufweist, wobei zusätzlich die Fahrzeuginsassen vor Magnetfeldern abgeschirmt werden können. Somit können vorteilhaft Störungen von körpernahen und lebenserhaltenden Geräten von Fahrzeuginsassen, wie beispielsweise Insulinpumpen oder Herzschrittmachern, reduziert, vorzugsweise vermieden werden.

In einer Ausführungsform ist die Funktionsschicht als sogenannte Schwereschicht ausgebildet. Unter einer Schwereschicht wird im Sinne der vorliegenden technischen Lehre insbesondere eine Schicht verstanden, die - insbesondere aufgrund eines relativ hohen Flächengewichts - eingerichtet ist, um Körperschall und Luftschall zu dämpfen. Die Funktionsschicht ist insbesondere eingerichtet zur magnetischen Abschirmung. Die Zwischenschicht ist insbesondere eingerichtet zur Schalldämpfung.

Dass die Deckschicht eine Sichtfläche aufweist, bedeutet im Sinne der vorliegenden technischen Lehre insbesondere, dass die Deckschicht eine von einem Innenraum her sichtbare Oberfläche ausbildet oder aufweist. Als Innenraum ist beispielsweise ein Insassenraum eines Kraftfahrzeugs gemeint, sodass es sich bei der Sichtfläche um diejenige Fläche der Schichtanordnung handelt, die unmittelbar an den Insassenraum angrenzt und von dem Insassenraum des Kraftfahrzeugs her zu sehen sind. Bei der Deckschicht kann es sich insbesondere um eine Innenverkleidung des Insassenraums handeln. Es ist auch möglich, dass es sich bei der Sichtfläche um die dem Insassenraum zugewandte Fläche eines Bodens des Insassenraums handelt.

Gemäß einer Weiterbildung der Erfindung ist vorgesehen, dass die Zwischenschicht weichmagnetische Partikel aufweist. Die Zwischenschicht ist somit insbesondere zusätzlich eingerichtet zur magnetischen Abschirmung. Vorteilhafterweise kann so die magnetische Abschirmung der Schichtanordnung weiter verbessert werden.

Gemäß einer Weiterbildung der Erfindung ist vorgesehen, dass die weichmagnetischen Partikel zumindest einer Schicht, ausgewählt aus der Funktionsschicht und der Zwischenschicht, parallel oder amorph ausgerichtet sind. Vorteilhafterweise kann so die magnetische Abschirmung der Schichtanordnung weiter verbessert werden.

Gemäß einer Weiterbildung der Erfindung ist vorgesehen, dass die weichmagnetischen Partikel der Funktionsschicht in einer ersten Richtung ausgerichtet sind, wobei die weichmagnetischen Partikel der Zwischenschicht in einer von der ersten Richtung verschiedenen zweiten Richtung ausgerichtet sind. Auf diese Weise wird vorteilhaft eine besonders starke magnetische Abschirmung erreicht.

Gemäß einer Weiterbildung der Erfindung ist vorgesehen, dass die erste Richtung und die zweite Richtung orthogonal zueinander orientiert sind. Auf diese Weise ergibt sich vorteilhaft eine ganz besonders starke Abschirmung des Magnetfelds.

Gemäß einer Weiterbildung der Erfindung ist vorgesehen, dass das Matrixmaterial Silikon aufweist, insbesondere daraus besteht. Alternativ oder zusätzlich ist vorgesehen, dass die weichmagnetischen Partikel einen ferromagnetischen Werkstoff aufweisen, insbesondere daraus bestehen. Alternativ oder zusätzlich ist vorgesehen, dass das textile Flächengebilde einen Filz und/oder einen Stoffteppich aufweist, insbesondere daraus besteht. Vorteilhafterweise wird so eine ausreichend hohe akustische Schalldämpfung erreicht.

Gemäß einer Weiterbildung der Erfindung ist vorgesehen, dass die weichmagnetischen Partikel einen Werkstoff aufweisen, insbesondere daraus bestehen, der ausgewählt ist aus einer Gruppe der weichmagnetischen Nickel-Eisen-Legierungen. Vorteilhafterweise kann so eine besonders gute magnetische Abschirmung bei einer gleichzeitig relativ geringen Masse erreicht werden.

Eine Nickel-Eisen-Legierung im Sinne der vorliegenden technischen Lehre ist insbesondere eine Legierung, mit einem Massenanteil von 72 % bis 80 % an Nickel sowie Anteilen von einem oder mehreren der Elemente Kupfer, Molybdän, Kobalt oder Chrom. Die Nickel-Eisen-Legierung ist insbesondere ein µ-Metall. Die Nickel-Eisen-Legierung weist insbesondere eine hohe magnetische Permeabilität auf.

Gemäß einer Weiterbildung der Erfindung ist vorgesehen, dass eine weitere Schicht, auch als Zusatzschicht bezeichnet, aus einem Werkstoff, der ausgewählt ist aus einer Gruppe der weichmagnetischen Nickel-Eisen-Legierungen, zwischen der Zwischenschicht und der Funktionsschicht angeordnet ist.

Die Aufgabe wird auch gelöst, indem eine Innenraumdämpfung für ein Kraftfahrzeug geschaffen wird, mit einer erfindungsgemäßen Schichtanordnung oder einer Schichtanordnung gemäß einer oder mehreren der zuvor beschriebenen Ausführungsformen. Die Innenraumdämpfung ist mit der Funktionsschicht an einem Kraftfahrzeug, insbesondere an elektrischen Komponenten eines Kraftfahrzeugs, befestigbar, insbesondere wird sie daran befestigt. In Zusammenhang mit der Innenraumdämpfung ergeben sich insbesondere die Vorteile, die bereits in Zusammenhang mit der Schichtanordnung erläutert wurden.

Die Aufgabe wird auch gelöst, indem ein Kraftfahrzeug geschaffen wird, mit einer erfindungsgemäßen Innenraumdämpfung oder einer Innenraumdämpfung gemäß einer oder mehreren der zuvor beschriebenen Ausführungsformen. In Zusammenhang mit dem Kraftfahrzeug ergeben sich insbesondere die Vorteile, die bereits in Zusammenhang mit der Innenraumdämpfung erläutert wurden.

Die Erfindung wird im Folgenden anhand der Zeichnung näher erläutert. Dabei zeigen:
- Fig. 1: eine schematische Darstellung eines Kraftfahrzeugs mit einer Innenraumdämpfung,
- Fig. 2: eine schematische Darstellung eines ersten Ausführungsbeispiels einer Innenraumdämpfung und
- Fig. 3: eine schematische Darstellung eines zweiten Ausführungsbeispiels einer Innenraumdämpfung.

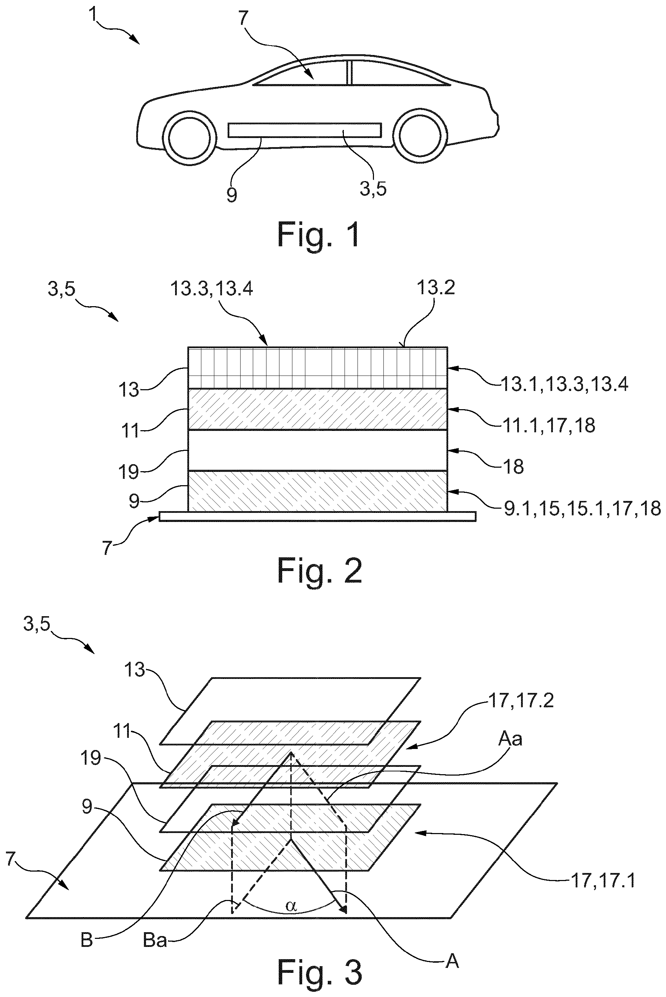

Figur 1 zeigt eine schematische Darstellung eines Kraftfahrzeugs 1.

Das Kraftfahrzeug 1 weist eine als Innenraumdämpfung 3 ausgebildete Schichtanordnung 5 auf. Bevorzugt begrenzt die Schichtanordnung 5 zumindest bereichsweise einen Innenraum 7 des Kraftfahrzeugs 1.

Die Innenraumdämpfung 3 ist bevorzugt mit einer Funktionsschicht 9 an dem Kraftfahrzeug 1 befestigbar, insbesondere befestigt.

Figur 2 zeigt eine schematische Darstellung eines ersten Ausführungsbeispiels einer als Innenraumdämpfung 3 ausgebildeten Schichtanordnung 5, insbesondere zur Verkleidung des Innenraums 7 des Kraftfahrzeugs 1 gemäß Figur 1.

Dabei sind gleiche und funktionsgleiche Elemente in allen Figuren mit gleichen Bezugszeichen versehen, sodass insoweit jeweils auf die vorangegangene Beschreibung verwiesen wird.

Die Schichtanordnung 5 zur Verkleidung des Innenraums 7 des Kraftfahrzeugs 1 umfasst, bevorzugt in dieser Schichtfolge, eine Funktionsschicht 9, eine Zwischenschicht 11 und eine Deckschicht 13. Die Funktionsschicht 9 weist einen Verbundwerkstoff 9.1 aus einem Matrixmaterial 15 und darin eingebetteten weichmagnetischen Partikeln 17 auf, wobei die Zwischenschicht 11 einen Schaumwerkstoff 11.1 aufweist. Die Deckschicht 13 weist ein textiles Flächengebilde 13.1 auf, wobei die Deckschicht 13 als eine Sichtfläche 13.2 eingerichtet ist.

Bevorzugt ist vorgesehen, dass die Zwischenschicht 11 weichmagnetische Partikel 17 aufweist.

Bevorzugt ist vorgesehen, dass die weichmagnetischen Partikel 17 einer Schicht, ausgewählt aus der Funktionsschicht 9 und der Zwischenschicht 11, parallel oder amorph ausgerichtet sind.

Bevorzugt ist vorgesehen, dass das Matrixmaterial 15 Silikon 15.1 aufweist. Alternativ oder zusätzlich ist bevorzugt vorgesehen, dass die weichmagnetischen Partikel 17 einen ferromagnetischen Werkstoff aufweisen. Alternativ oder zusätzlich ist vorgesehen, dass das textile Flächengebilde 13.1 einen Filz 13.3 und/oder einen Stoffteppich 13.4 aufweist.

Bevorzugt ist vorgesehen, dass die weichmagnetischen Partikel 17 einen Werkstoff aufweisen, der ausgewählt ist aus einer Gruppe der weichmagnetischen Nickel-Eisen-Legierungen 18.

Bevorzugt ist vorgesehen, dass eine weitere Schicht 19 aus einem Werkstoff, der ausgewählt ist aus einer Gruppe der weichmagnetischen Nickel-Eisen-Legierungen 18, zwischen der Zwischenschicht 11 und der Funktionsschicht 9 angeordnet ist.

Figur 3 zeigt eine schematische Darstellung eines zweiten Ausführungsbeispiels einer als Innenraumdämpfung 3 ausgebildeten Schichtanordnung 5, insbesondere zur Verkleidung des Innenraums 7 des Kraftfahrzeugs 1 gemäß Figur 1.

Die Schichtanordnung 5 weist, ebenfalls wie die Schichtanordnung 5 des ersten Ausführungsbeispiels in Figur 2, eine Funktionsschicht 9, bevorzugt eine weitere Schicht 19, eine Zwischenschicht 11 und eine Deckschicht 13 auf.

Zur besseren Übersichtlichkeit sind die weitere Schicht 19 und die Deckschicht 13 transparent dargestellt.

Bevorzugt ist vorgesehen, dass die weichmagnetischen Partikel 17 der Funktionsschicht 9 - hier mit dem Bezugszeichen 17.1 versehen - in einer durch den Pfeil A dargestellten ersten Richtung ausgerichtet sind, wobei die weichmagnetischen Partikel 17 der Zwischenschicht 11 - hier mit dem Bezugszeichen 17.2 versehen - in einer von der ersten Richtung verschiedenen und durch den Pfeil B dargestellten zweiten Richtung ausgerichtet sind, was hier insbesondere durch einen Winkel α dargestellt ist. Bei den weichmagnetischen Partikeln 17.1 und 17.2 handelt es sich der Art und Gattung nach insbesondere um die gleichen weichmagnetischen Partikel 17, die jedoch unterschiedlich ausgerichtet sind und sich gerade dadurch unterscheiden.

Bevorzugt ist vorgesehen, dass die erste Richtung A und die zweite Richtung B orthogonal zueinander orientiert sind.

Zur besseren Darstellung des Winkels α ist die zweite Richtung - als Pfeil B - der weichmagnetischen Partikel 17.2 der Zwischenschicht 11 auf die Funktionsschicht 9 als eine erste strichlierte Linie Ba projiziert, wobei die erste Richtung - als Pfeil A - der weichmagnetischen Partikel 17.1 der Funktionsschicht 9 auf die Zwischenschicht 11 durch eine von der ersten strichlierten Linie Ba verschiedenen zweiten strichlierte Linie Aa projiziert ist.

## Patentansprüche

1. Schichtanordnung (5) zur Verkleidung eines Innenraums (7), insbesondere eines Kraftfahrzeugs (1), umfassend eine Funktionsschicht (9), eine Zwischenschicht (11) und eine Deckschicht (13), wobei
- die Funktionsschicht (9) einen Verbundwerkstoff (9.1) aus einem Matrixmaterial (15) und darin eingebetteten weichmagnetischen Partikeln (17) aufweist, wobei
- die Zwischenschicht (11) einen Schaumwerkstoff (11.1) aufweist, wobei
- die Deckschicht (13) ein textiles Flächengebilde (13.1) aufweist, wobei
- die Deckschicht (13) eine Sichtfläche (13.2) aufweist.

2. Schichtanordnung (5) nach Anspruch 1, wobei
- die Zwischenschicht (11) weichmagnetische Partikel (17) aufweist.

3. Schichtanordnung (5) nach Anspruch 2, wobei die weichmagnetischen Partikel (17) einer Schicht, ausgewählt aus der Funktionsschicht (9) und der Zwischenschicht (11)
- parallel oder
- amorph ausgerichtet sind.

4. Schichtanordnung (5) nach Anspruch 2 oder 3, wobei
- die weichmagnetischen Partikel (17) der Funktionsschicht (9) in einer ersten Richtung (A) ausgerichtet sind, wobei
- die weichmagnetischen Partikel (17) der Zwischenschicht (11) in einer von der ersten Richtung (A) verschiedenen zweiten Richtung (B) ausgerichtet sind.

5. Schichtanordnung (5) nach Anspruch 4, wobei
- die erste Richtung (A) und die zweite Richtung (B) orthogonal zueinander orientiert sind.

6. Schichtanordnung (5) nach einem der Ansprüche 2 bis 5, wobei
- das Matrixmaterial (15) Silikon (15.1) aufweist, und/oder
- die weichmagnetischen Partikel (17) einen ferromagnetischen Werkstoff aufweisen, und/oder
- das textile Flächengebilde (13.1) einen Filz (13.3) und/oder einen Stoffteppich (13.4) aufweist.

7. Schichtanordnung (5) nach einem der Ansprüche 2 bis 6, wobei
- die weichmagnetischen Partikel (17) einen Werkstoff aufweisen, der ausgewählt ist aus einer Gruppe der weichmagnetischen Nickel-Eisen-Legierungen (18).

8. Schichtanordnung (5) nach einem der vorhergehenden Ansprüche, wobei
- eine weitere Schicht (19) aus einem Werkstoff, der ausgewählt ist aus einer Gruppe der weichmagnetischen Nickel-Eisen-Legierungen (18), zwischen der Zwischenschicht (11) und der Funktionsschicht (9) angeordnet ist.

9. Innenraumdämpfung (3) für ein Kraftfahrzeug (1), mit einer Schichtanordnung (5) nach einem der vorhergehenden Ansprüche, wobei
- die Innenraumdämpfung (3) mit der Funktionsschicht (9) an einem Kraftfahrzeug (1) befestigbar ist.

10. Kraftfahrzeug (1) mit einer Innenraumdämpfung (3) nach Anspruch 9.

## Claims

1. Layer arrangement (5) for lining an interior (7), in particular of a motor vehicle (1), comprising a functional layer (9), an intermediate layer (11) and a cover layer (13), wherein
- the functional layer (9) comprises a composite material (9.1) made of a matrix material (15) and soft magnetic particles (17) embedded therein, wherein
- the intermediate layer (11) comprises a foam material (11.1), wherein
- the cover layer (13) is a textile fabric (13.1), wherein
- the cover layer (13) has a visible surface (13.2).

2. Layer arrangement (5) according to claim 1, wherein
- the intermediate layer (11) comprises soft magnetic particles (17).

3. Layer arrangement (5) according to claim 2, wherein the soft magnetic particles (17) of a layer selected from the functional layer (9) and the intermediate layer (11) are aligned so as to be
- parallel or
- amorphous.

4. Layer arrangement (5) according to claim 2 or claim 3, wherein
- the soft magnetic particles (17) of the functional layer (9) are aligned in a first direction (A), wherein
- the soft magnetic particles (17) of the intermediate layer (11) are aligned in a second direction (B) that is different from the first direction (A).

5. Layer arrangement (5) according to claim 4, wherein
- the first direction (A) and the second direction (B) are oriented orthogonally to each other.

6. Layer arrangement (5) according to any of claims 2 to 5, wherein
- the matrix material (15) comprises silicone (15.1), and/or
- the soft magnetic particles (17) comprise a ferromagnetic material, and/or
- the textile fabric (13.1) comprises a felt (13.3) and/or a fabric carpet (13.4).

7. Layer arrangement (5) according to any of claims 2 to 6, wherein
- the soft magnetic particles (17) comprise a material selected from a group of soft magnetic nickel-iron alloys (18).

8. Layer arrangement (5) according to any of the preceding claims, wherein
- a further layer (19) made of a material selected from a group of soft magnetic nickel-iron alloys (18) is arranged between the intermediate layer (11) and the functional layer (9).

9. Interior sound insulation (3) for a motor vehicle (1), comprising a layer arrangement (5) according to any of the preceding claims, wherein
- the interior sound insulation (3) can be attached to a motor vehicle (1) by means of the functional layer (9).

10. Motor vehicle (1) comprising interior sound insulation (3) according to claim 9.

## Revendications

1. Agencement de couches (5) pour l'habillage d'un espace intérieur (7), en particulier d'un véhicule automobile (1), comprenant une couche fonctionnelle (9), une couche intermédiaire (11) et une couche de recouvrement (13), dans lequel
- la couche fonctionnelle (9) présente un matériau composite (9.1) constitué d'un matériau matriciel (15) et de particules magnétiques douces (17) noyées dans celui-ci, dans lequel
- la couche intermédiaire (11) présente un matériau en mousse (11.1), dans lequel
- la couche de recouvrement (13) présente une structure textile plane (13.1), dans lequel
- la couche de recouvrement (13) présente une surface visible (13.2).

2. Agencement de couches (5) selon la revendication 1, dans lequel
- la couche intermédiaire (11) présente des particules magnétiques douces (17).

3. Agencement de couches (5) selon la revendication 2, dans lequel les particules magnétiques douces (17) d'une couche, choisie parmi la couche fonctionnelle (9) et la couche intermédiaire (11), sont orientées
- en parallèle ou
- de manière amorphe.

4. Agencement de couches (5) selon la revendication 2 ou 3, dans lequel
- les particules magnétiques douces (17) de la couche fonctionnelle (9) sont orientées dans une première direction (A), dans lequel
- les particules magnétiques douces (17) de la couche intermédiaire (11) sont orientées dans une seconde direction (B) différente de la première direction (A).

5. Agencement de couches (5) selon la revendication 4, dans lequel
- la première direction (A) et la seconde direction (B) sont orientées orthogonalement l'une par rapport à l'autre.

6. Agencement de couches (5) selon l'une des revendications 2 à 5, dans lequel
- le matériau matriciel (15) présente du silicone (15.1), et/ou
- les particules magnétiques douces (17) présentent un matériau ferromagnétique, et/ou
- la structure textile plane (13.1) présente un feutre (13.3) et/ou un tapis en tissu (13.4).

7. Agencement de couches (5) selon l'une des revendications 2 à 6, dans lequel
- les particules magnétiques douces (17) présentent un matériau qui est choisi dans un groupe d'alliages nickel-fer magnétiques doux (18).

8. Agencement de couches (5) selon l'une des revendications précédentes, dans lequel
- une autre couche (19) constituée d'un matériau qui est choisi dans un groupe d'alliages nickel-fer magnétiques doux (18) est disposée entre la couche intermédiaire (11) et la couche fonctionnelle (9).

9. Moyen d'amortissement d'espace intérieur (3) pour un véhicule automobile (1), comportant un agencement de couches (5) selon l'une des revendications précédentes, dans lequel
- le moyen d'amortissement d'espace intérieur (3) peut être fixé avec la couche fonctionnelle (9) sur un véhicule automobile (1).

10. Véhicule automobile (1) comportant un moyen d'amortissement d'espace intérieur (3) selon la revendication 9.
